(19) Europäisches Patentamt
European Patent Office
Office européen des brevets

(11) **EP 1 841 178 B1**

(12) **EUROPEAN PATENT SPECIFICATION**

(45) Date of publication and mention
of the grant of the patent:
**19.08.2009 Bulletin 2009/34**

(51) Int Cl.:
***H04L 29/08*** *(2006.01)*

(21) Application number: **06112140.6**

(22) Date of filing: **31.03.2006**

(54) **Method and apparatus for distributing a query**

Verfahren und Vorrichtung zur Verbreitung einer Abfrage

Procédé et dispositif pour distribuer une requête

(84) Designated Contracting States:
**DE GB**

(43) Date of publication of application:
**03.10.2007 Bulletin 2007/40**

(73) Proprietor: **NTT DoCoMo, Inc.**
**Tokyo (JP)**

(72) Inventors:
• **Frank, Christian**
**8037, Zurich (CH)**
• **Roduner, Christof**
**8057, Zurich (CH)**
• **Mattern, Friedemann**
**8092, Zurich (CH)**
• **Noda, Chie**
**80796, Munich (DE)**
• **Kellerer, Wolfgang**
**82256, Fuerstenfeldbruck (DE)**

(74) Representative: **Betten & Resch**
**Patentanwälte**
**Theatinerstrasse 8**
**(Fünf Höfe)**
**80333 München (DE)**

(56) References cited:
**US-A1- 2004 030 677**

• **C.NODA, M.SGROI, W.KELLERER, C.FRANK, C.RODUNER: "Poster Abstract: Interfacing the Real World with Ubiquitous Gateways" ON LINE, 13 February 2006 (2006-02-13), pages 1-3, XP002394391 European Workshop on Wireless Sensor Networks, Zurich Retrieved from the Internet: URL:http: //www.docomoeurolabs.de/pdf/publi cations/ 2006/2006_FNL_Poster_Abstract_Inte rfacing_ Real_World_Ubiquitous_Gateways.pdf > [retrieved on 2006-08-10]**
• **DUBOIS-FERRIERE H ET AL: "Efficient and practical query scoping in sensor networks" MOBILE AD-HOC AND SENSOR SYSTEMS, 2004 IEEE INTERNATIONAL CONFERENCE ON FORT LAUDERDALE, FL, USA 25-27 OCT. 2004, PISCATAWAY, NJ, USA,IEEE, US, 25 October 2004 (2004-10-25), pages 564-566, XP010765278 ISBN: 0-7803-8815-1**
• **BILL SEGALL AND DAVID ARNOLD: "Elvin has left the building: A publish/subscribe notification service with quenching" ON LINE, September 1997 (1997-09), XP002152244**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF INVENTION

The present invention relates to a method for distributing a query in a wide-area network infrastructure, whereas a large number of sensors are interconnected directly or via intermediate nodes.

BACKGROUND OF THE INVENTION

Sensor networks may connect a large number of sensors through a wide area network. Such a wide-area infrastructure can be used as a platform for implementing a wide range of end-user services. For example, the personal mobile device, assuming it is equipped with or has access to an object sensor which can sense and identify electronically tagged objects, can be tasked to keep track of a user's personal objects and remember when and where these objects have left his personal space. We call such a mobile device which mediates between sensor networks and wide-area network infrastructure a ubiquitous gateway (GW). These retrieved data can later help the user locate where his personal belongings are. In other examples the user may locally delegate the care of his or her personal items to other everyday devices equipped with an object sensor: Hangers in a restaurant could for example guard the user's coat, a traveller on a train could delegate his baggage to smart baggage shelves that would ensure that he or she does not leave behind any personal belongings. In university or lab environments, object sensors can be installed at an entrance of a lab (e.g., with electronic equipment) and be used to keep track which hardware has passed the entrance with whom (thus enabling a very intuitive and simple check-in and check-out of lab hardware).

In a large scale distributed system, especially where a large number of sensors are interconnected and loosely coupled through a wide-area network infrastructure, it is required to disseminate a query only to a subset of all available sensors in order to perform efficient and scalable search.

The publish/subscribe paradigm provides a good opportunity for interaction between a large number of clients submitting queries for objects and their location on the one hand and many heterogeneous object sensors on the other hand. Moreover, it can provide integration to backend services that can, for example, store a history of a user's objects.

The publish/subscribe paradigm is useful in a distributed system where loosely coupled applications and software components interact. Messages published by senders are sent as events to subscribers whose subscriptions match the messages. Nowadays one can see emerging sensor networks interconnected by a wide-area network infrastructure such as a mobile network and the Internet. In this sensor-Internet paradigm, the number of generated events and subscribers is too large. This means that it is not feasible to distribute a query to all sensors connected to the network. It is therefore an object of the invention to provide a mechanism which can deal with a large number of sensors connected by a wide-area network in an efficient manner.

There exist content-based publish subscribe systems that attempt to route events and/or subscriptions based on their actual content. These systems are based on forwarding a subscription to a given part of the network only if the subscription matches an aggregate predicate describing what kind of events can be generated in the respective part of the network. Similarly, event forwarding can be restricted according to an aggregate predicate describing what kinds of subscriptions exist in the respective part of the network. Such a system is described e.g. in B. Segall and D. Arnold. Elvin has left the building: A publish/subscribe notification service with quenching. In Proceedings of the 1997 Australian UNIX Users Group, Brisbane, Australia, Sept. 1997.

However such a subscription or event filtering based on aggregate predicates, called quenching, is not able to perform any significant distinction between the very simple events and subscriptions that exist in the presented "Remember and Find" application: 'Object found' events on the one hand and subscriptions for a given object on the other hand. Essentially, every object sensor may produce object found events and every client may be subscribing to any object. Therefore limiting subscription forwarding based on the type of subscription or limiting event forwarding based on the type of event is not a feasible solution in cases where there is no possibility to distinguish different types of events or subscriptions.

C. NODA, M. SGROI, W. KELLERER, C. FRANK, C. RODUNER: "Poster Abstract: Interfacing the Real World with Ubiquitous Gateways" ON LINE, 13 February 2006 (2006-02-13), pages 1-3, XP002394391 European Workshop on Wireless Sensor Networks, Zurich discloses to carry out a query distribution scoping to select a relevant subset of sensors to which a query is to be distributed based on history data present in the system data on objects, users, and their present or previous locations

DUBOIS-FERRIERE H ET AL: "Efficient and practical query scoping in sensor networks" MOBILE AD-HOC AND SENSOR SYSTEMS, 2004 IEEE INTERNATIONAL CONFERENCE ON FORT LAUDERDALE, FL, USA 25-27 OCT. 2004, PISCATAWAY, NJ, USA, IEEE, US, 25 OCTOBER 2004 (2004-10-25), pages 564-566, XP010765278 ISBN: 0-7803-8815-1 discloses to determine the distribution scope of the query in a network based on a Voronoi tessellation where the nodes are divided into Voronoi cells based on a metric which is based on hop count dintance.

US 2004/0030477 discloses a method for optimization of a query in a database system. When a query is received which requests data from a database, a plurality of plans which can be used for obtaining data requested by the query are enumerated. A search tree is created based upon these plans, with nodes of the search tree representing segments of the plans. A limited number of nodes of the search tree are selected for evaluation to limit the effort spent on query optimization. A complete plan for execution of the query is generated by evaluating the selected nodes of the search tree and, if the evaluation determines that a given node is more favorable than comparable nodes previously evaluated, retaining the given node as part of the complete plan.

SUMMARY OF THE INVENTION

The object of the present invention is to determine the distribution scope of a query to be distributed to selected nodes in a network infrastructure, which is solved by a method according to claim 1, an apparatus according to claim 12 and a computer program according to claim 14.

According to one embodiment there is provided a method for determining the distribution scope of a query to be distributed to selected nodes in a network infrastructure,
said method comprising:

> selecting the nodes to which said query is to be distributed based on heuristics in order to forward the query only to nodes where based on said heuristics a positive query result may be expected, whereas,
> said heuristics are implemented through a computer-implemented data model which expresses said heuristics as relations between entities of said network infrastructure, said entities being elements of said network or users of said network, each relation comprising a source entity and one or more destination entities and having annotated a weight attribute or a cost attribute to provide a relevance-based ranking of said destination entities associated with said source entity, and whereas said method comprises
> selecting said nodes to which said query is to be dispatched based on the weight attributes of said relations such that those nodes for which the weight attributes are representative of a higher relevance are preferred over those nodes for which the weight attributes are representative of a lower relevance.

Implementing the heuristics as relations between entities of the network whereas each relation is assigned a weight or cost makes it possible to select the nodes by using such heuristics in a manner which resembles the way a human user would re-iterate all facts or knowledge known about a lost object (e.g. where she/he has last seen it, to whom he might have handed it over, etc.) and using them as clues to the missing object's location. A relation may therefore be regarded as a representation of knowledge about the possible whereabouts of an object, the possible whereabouts being expressed through relations which compose a "path" which the object may have taken until it reached its present location. In other cases the "path" is not the actual physical path an object has taken, but rather a logical path, like an "association chain" which through several chain elements connects the original location and the present location of an object in a logical manner. Starting from a starting entity the relations may be traversed and the costs or weights of traversing a relation may be assessed, thereby "probing" a possible combination of facts together with weights (or costs) associated to these facts in order to obtain costs or weights of the sensor nodes reached if the given heuristic is employed. It should be noted that the data path generated by traversing the relations does not necessarily coincide with the network path along which the query then actually travels when being dispatched. Rather the data path may reveal nodes to which the query then may be dispatched.

Embodiments of the invention target an application scenario, where mobile phones trace users' objects (which are equipped with small electric tags), distribute useful context information related to these objects, and are able to locate them when lost or misplaced. The algorithm according to an embodiment - parameterized with a data model of the application domain - is able to rank object sensors by success probability and task them to perform queries for a given tagged object. The underlying data model is used to express heuristics based on associations of entities (e.g., associations between objects, human social relationships) and history data (e.g., location history, user history). In one embodiment there are taken into account not only success probabilities (of querying a given object sensor) but also actual costs of query distribution and execution, which lead to a search that minimises the expected costs generated by query distribution prior to a successful reply.

According to one embodiment said query method comprises:

> a) starting from a start entity, determining candidate entities to which said query could be dispatched based on said destinations associated by said relation with said start entity and determining the corresponding costs or weights of said candidate elements;
> b) selecting candidate entities to which the query is to be forwarded based on said costs or weights ;
> c) using said candidate entities as new start entities and determining new candidate entities based on the relations associating said candidate entities with further entities;

repeating the foregoing steps b) and c) until a termination condition is fulfilled..

The repeated traversing of relations (from source to destination) to find new candidate elements establishes a graph in which nodes represent entities of the data model and which contains as nodes candidate elements with associated cost or weight values. In this manner a list of candidate nodes can be obtained up to a termination condition being fulfilled. The termination condition may be, e.g. that a given cost budget has been used up, that a positive query reply has been obtained, or that a timeout has expired.

According to one embodiment the method further comprises:

generating a search graph based on a source entity by following beginning with said source entity a data path given by traversing said relations from the source entity of a relation to its destinations;

determining the accumulated weight or costs for each destination reached when following said data path;

selecting the nodes to which said query is to be dispatched based on the accumulated weights or costs of said nodes in accordance with the ranking of said nodes according to weights or costs.

The accumulation of costs or weights tracks the generation of a graph and the corresponding evolution of costs or weights. In this manner the obtained nodes can be ranked and the most promising ones may be selected for dispatching the query to them.

According to one embodiment a budget in weights or costs is defined for said query and said method comprises:

terminating the search of said nodes or the distribution of said query when a maximum cost limit is reached.

The cost limit is a possibility to limit the number of selected nodes to which a query is to be dispatched. Alternatively the process may be aborted when a positive query reply is obtained.

According to one embodiment an entity in said network can have assigned one or more relations, and each relation can comprise said entity as a source entity and one or more destination entities, each relation being representative of a different heuristics involving different knowledge about the relevance of the destination entity for the source entity.

Multiple relations for the same network entity (being a source entity in a relation) may express different heuristics which in turn express different types of knowledge about the relevance of possible destination entities and their relation to the source entity.

Multiple relations between the same entities involved in the system may express different heuristics which in turn express different types of knowledge about the relevance of possible destination entities and their relation to the source entity. For example, the relations between users and cells can be cell profile (which cells users spend most of their time) and user history (which cells users visited recently).

A relation itself may comprise a one-to-many relation which associates a source entity (e.g. a cell, a node, a user) with one or more destination entities (which may again be cells, users, nodes). The term "destination" here not necessarily means that a message will arrive at this destination, rather it means that if the relation is followed or traversed to generate a search graph this is done in the direction from the source entity of the relation to one or more of the destination entities of the relation.

According to one embodiment said relations may comprise one or more of the following types of relations:

an object association where objects are associated to users;

an object location history relation where the system keeps a history of cells in which the object was last seen;

a cell profile relation where the system stores information about the cells which are more relevant to for users;

a user history relation where the system stores all cells users visited recently;

a neighborhood relation where a cell-based location model can provide information of neighborhood cells;

a user association where users are associated to others;

an object gateway history relation where the wide-area network infrastructure can store a history of events on objects, relating objects to gateways that have issued the events;

a gateway registry relation where the wide-area network infrastructure provides a database relating gateways to their current cell;

a gateway association relation where users are associated with certain gateways.

The multiple relations may implement multiple different heuristics.

According to one embodiment said network is a network connecting a plurality of sensors which may sense signals from electronically tagged objects, whereas said sensors are connected to said network via gateways which themselves are interconnected through said network infrastructure, whereas said nodes to be selected and to which said query is to be forwarded are gateways which may in response to receipt of said query said sensors to obtain a query result.

The application of locating a tagged object though sensors is particularly suited for applying the query scoping according to an embodiment of the invention.

The sensor may be implemented or integrated on a mobile phone which may then act as gateway.

According to one embodiment said costs are expressed by one or more of the following:

a cost attribute assigned to the relation;

a probability assigned to the relation, said probability indicating the likelihood for finding a positive query result when forwarding said query to a destination in said relation;

the actual costs in monetary units for querying a network element (i.e. object sensors, gateways).

The annotated value may be a cost or it may be a probability. According to one embodiment the probability may be derived as a function of the cost. The actual cost may be taken into account in order to consider actual costs arising from services like network usage, service of a service provider, etc.

According to one embodiment a cost or weight assigned to a relation is an indication of the preference of this relation over other relations, and

the destinations included in a relation are be assigned a ranking parameter so that the cost or weight of a destination is based on the cost or weight assigned to the relation and the ranking parameter assigned to the destination. In case of costs the costs may be accumulated, in case of probabilities they may be multiplied.

According to one embodiment said relations implementing said heuristics are at least in part stored in a distributed manner in entities of said network, and

an algorithm for selecting said nodes to which the query is to be distributed is executed in a distributed manner by using said stored relations in a distributed manner.

The distributed implementation of the heuristics allows executing also the query scoping in a distributed manner. The distributed storage of data furthermore makes it possible that data which a user doesn't want to give away are stored only at his device, e.g. his personal mobile node or gateway.

According to one embodiment a distributed query scoping is implemented by assigning a budget which is decreased hop-by-hop, or

a centralized node handles a budget and distributed nodes reserve a budget for query distribution in an ad-hoc manner.

The distributed execution of query scoping may be implemented such that there is assigned a budged which decreases hop-by-hop. This avoids the need to centrally control the budget during query scoping. Another method would be to handle the budget centrally and to assign budget parts to individual nodes which then act independently. One may assume that the distributed execution may be also implemented such that probabilities associated with relations between entities multiplies hop-by-hop. Distribution of queries is terminated when probabilities reach to certain limitation.

According to one embodiment there is provided an apparatus for determining the distribution scope of a query to be distributed to selected nodes in a network infrastructure, said apparatus comprising:

means for selecting the nodes to which said query is to be distributed based on heuristics in order to forward the query only to search nodes were based on said heuristics a positive query result may be expected, said apparatus further comprising:

means for implementing said heuristics through a computer-implemented data model which expresses said heuristics as relations between entities of said network infrastructure, said entities being elements of said network or users of said network, each relation comprising a source entity and one or more destination entities and having annotated a weight attribute or a cost attribute to provide a relevance-based ranking of said destination entities associated with said source entity, and

means for selecting of said nodes to which said query is to be dispatched being based on the weight attributes of said relations such that those nodes for which the weight attributes are representative of a higher relevance are preferred over those nodes for which the weight attributes are representative of a lower relevance.

According to one embodiment there is provided an apparatus comprising:

means for carrying out a method according to embodiments of the invention.

According to one embodiment there is provided a computer program comprising computer executable code which enables a computer when being executed out to carry out a method according to embodiments of the invention.

BRIEF DESCRIPTION OF THE DRAWINGS

Fig. 1 schematically illustrates a system configuration according to an embodiment of the invention.
Fig. 2 schematically illustrates a data model according to an embodiment of the invention.
Fig. 3 schematically illustrates the paths with annotated costs or weights corresponding to a data model as shown in Fig. 3.
Fig. 4 schematically illustrates a relation according to an embodiment of the invention.
Fig. 5 schematically illustrates the execution of an algorithm according to an embodiment of the invention.
Fig. 6 schematically illustrates the execution of an algorithm according to a further embodiment of the invention.
Fig. 7 schematically illustrates the execution of an algorithm according to an embodiment of the invention.
Fig. 8 schematically illustrates the execution of an algorithm according to a further embodiment of the invention.
Fig. 9 schematically illustrates the schema of an algorithm according to a further embodiment of the invention.

DETAILED DESCRIPTION

In the following exemplary embodiments of the invention will be described which mainly relate to sensor networks. The principles of the invention, however, are applicable as well to other application scenarios.

In a large scale environment where a lot of sensors are interconnected through intermediate gateways, the matching between events (sensor readings) and subscribers (components sending a query for these readings) cannot be done neither at the senders, nor at the subscribers, nor at a centralised brokering service between two. According to one embodiment there is therefore employed a scoping of queries based on heuristics. Query scoping means that a query (e.g. a query like "look for a certain item") is not distributed to all sensors in the network but only to a limited number. Scoping of queries according to an embodiment described later enables selecting a small subset of event sources (i.e. object sensors OSs or ubiquitous gateways UGs) in order to dispatch queries with taking account of probabilities and actual costs. The search algorithm in one embodiment shall rank the candidate gateways, which allows processing sequentially and aborting in case of a given condition, e.g. upon success of the query.

In the following a system according to an embodiment of the invention will be described. The system employs query scoping to enable an appropriate selection of network entities to which a query should be dispatched. In one scenario, in which the so-called "event-subscriber paradigm" applies, this may be implemented by adequate and efficient matching between events and subscribers, that is, between sensors and a given query for sensor data.

In one embodiment a possible application which can make use of the scoping of queries is the *Remember and Find* application locating personal items in the sensor-Internet, when lost or misplaced. Everyday objects such as keys, wallets, or umbrellas can be equipped with small electric tags that allow detecting them via short-range radio communication interfaces such as ZigBee (see e.g. ZigBee Alliance, http://www.zigbee.orglen/index.asp) and NFC (see e.g. Near Field Communication (NFC) Forum, http://www.nfc-forum.org/home).

These objects equipped with such a tag are in the following called *tagged objects* (TOs). Devices that can sense and identify TOs and can be integrated into mobile phones are in the following called *object sensors* (OSs). OSs are interconnected with the wide-area network through mobile phones. In the following mobile phones, which acts as a mediator between OSs and the wide area network structure, are referred to as *ubiquitous gateways* (UGs). The system in one embodiment allows UGs and OSs to record and distribute useful context information related to users and TOs. For example, a UG equipped with an OS can keep track of the user's personal objects and monitor when, where and under which circumstances object has left the UG's communication range. This data can be stored locally or globally (i.e., on the wide-area infrastructure) and later help the user to locate the object.

Such a system may employ heuristics for the selection of a subset of those OSs and UGs (i.e., event sources) to which a user search query (i.e., subscription) shall be distributed. Scoping queries may be employed by any application that uses a large number of nodes, whose number is too large to distribute the query to all possible event sources. Sensor networks or sensor Internet are one example for the application of such scoping queries to distribute them to a subset of sensor nodes. Heuristics may be application specific, e.g., personal objects trailer driven by users' preferences in the above-mentioned application.

According to one embodiment the system stores and provides distributed valuable information for object search, such as associations (e.g., user to object, user to user, user to gateway), location profile (the user's important locations), and object history (when and where it was last seen). The data model according to one embodiment represents multiple relations among such information used for scoping of queries as heuristics. It can be used to express a wide range of search strategies and preferences of users or service providers (i.e., which available information shall be used in a priority order) by annotating relation types with weights (e.g., actual costs and probabilities). Heuristics used for queries distribution to a set of event sources (e.g., OSs and UGs in one embodiment) correspond to traversing relations in the data model. The algorithm for scoping follows all heuristics while considering weights, creates a partial search graph including cost attributes, replies with a list of event sources with higher ranking, and terminates search when a termination condition is fulfiled, e.g. maximum cost being reached.

In the following there will be described an overview of an architecture for the *Remember and Find* application as an example of one embodiment of the invention, and further a data model to express heuristics. There will be described an algorithm to distribute queries to a set of gateways for locating objects, by navigating through all heuristics in the given data model while considering weights.

The *Remember and Find* application already briefly discussed before requires retrieving a variety of context information from sensors. The abstraction of sensor information on the UG is called a *basic event source*. When a predefined condition is detected (e.g., when an object is sensed either in or out of range), a *notification* is generated. The notification may contain the historical values recorded by a variety of event sources. The *query service* of the UG (which may be referred to as ubiquitous gateway query service) is used to specify which conditions should be detected and what notifications should be generated. A notification can be sent to to the local user carrying the ubiquitous gateway (i.e., the mobile phone), to a remote user carrying another mobile phone, or to an appropriate service (such as a storage service like a global or personal database) in the infrastructure.

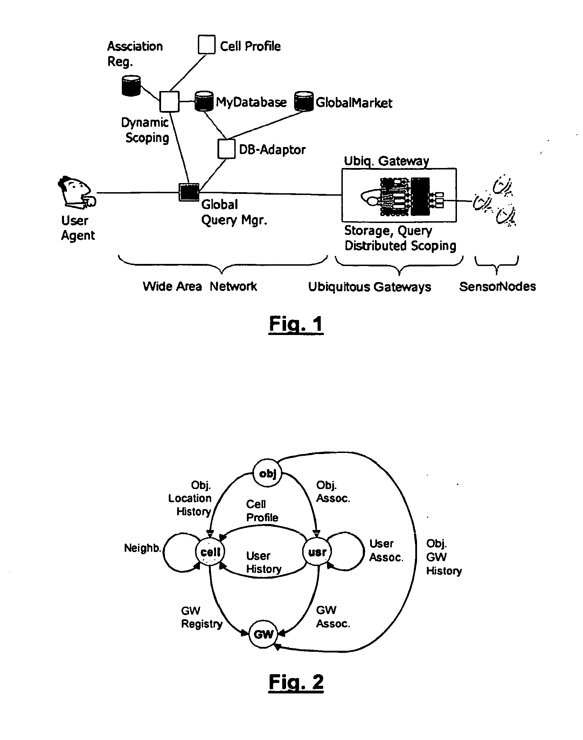

Figure 1 shows an overview of the system architecture. The *global query manager* provides event routing and large-scale query distribution.

When the Global Query Manager receives a query, it uses a *search scope provider* in order to relay it to the nodes or the ubiquitous gateways that are most appropriate depending on the client application's needs. According to one embodiment it may also keep track of active queries and removes them upon expiration or when the searched-for tagged object has been found. Apart from shielding application developers from the complexity of the underlying service infrastructure, the Global Query Manager serves the purpose of isolating the party initiating a query from the party receiving it. A mobile operator could for example act as a trusted intermediary between end-users who offer their terminals as sensing devices on the one hand and others who consume these services on the other hand. This allows for the effective enforcement of privacy and accounting policies. The interface also provides client applications with methods to monitor and control the costs incurred by their querying activities.

The query distribution is based on *scope providers* which implement different heuristic criteria for query scoping based on associations and history data. For example, a scope provider could be based on personal or global databases containing information on past object locations and implement a heuristic that starts searching where the object was last seen. A different scope provider could employ the location profile, which is able to extract the user's most frequented locations and thus direct queries to sensors at these locations. A third example of a scope provider could be based on the association registry, which relates users to their objects and to other UGs in the system. In Fig. 1 the scope provider is depicted as the box labeled "dynamic scoping", and it can be seen that it can access different databases such as MyDatabase and Association Registry which may store different heuristics which may be used to derive a query scope.

Such a scope provider could direct queries for a user's object to associated UGs and to UGs of associated users, assuming that these are likely to find the object. In other words, a scope provider uses relations which represent heuristics about how to select destination nodes, and it is able to return candidate destination nodes for forwarding a query based on said heuristics, whereas the candidate nodes may be ranked according to a ranking scheme such as their relevance or costs or weight or probability, as will become more apparent later. According to one embodiment a scope provider may be implemented by an entity of the network which is suitably programmed to access and evaluate the relations stored in one or more databases and to return a list of candidate nodes for being queried.

While in Fig. 1 the scope provider and the global query manager are illustrated as separate entities it will be understood by the skilled person that they may as well be implemented by a single entity.

In addition to global scope providers which access one or more centralized databases local scope providers can be implemented at UGs optionally to support scoping for local distribution of queries. This is schematically illustrated in Fig. 1 by the ubiquitous gateway which includes a local query scoping component.

As mentioned already, according to one embodiment heuristics can be used to distribute a query to a large number of UGs and OSs. They operate on associations and history data in the system. Figure 2 gives an example data model to express relations between entities involved in the *Remember and Find* application and the system. In Fig. 2 entity types are shown as circles, and relations as arrows. The direction of arrows presents the direction of transition during search algorithm execution.

"Entities" of a network may e.g. nodes of a network, but also other elements of a network such as cells or even users. Entities may even be elements which do not belong directly to the network. The term entity has therefore to be understood in a relatively broad manner, and entities may be any elements or persons or groups which are somehow related to a network or to its users so that it may make sense to provide a relation which involves this entity. An entity is a part of a relation and it is related through this relation directly or via intermediate other entities to the network.

On the other hand, nodes may be any elements of the network infrastructure such as routers, gateways, terminals, mobile phones, or the like.

The following relations are represented in Figure 2. Each relation is annotated with a weight attribute that can provide a relevance-based ranking of associated entities.

- **Object Association**: Objects are associated to users. Users can rank objects by the time they have spent carrying them (optionally).
- **Object Location History**: The system keeps a history of cells in which the object was last seen. Cells are ranked based on the time of the last report on the object.
- **Cell Profile:** The system stores information about the cells which are more relevant to for users, i.e., where users spend most of their time. Duration and frequency of visits can be used for ranking.
- **User History:** The system stores all cells users visited recently. It is ranked by the time of the last visit.
- **Neighborhood:** The cell-based location model can provide information of neighborhood cells. Ranking is based on proximity metric between cells.
- **User Association:** Users are associated to others. Ranking can be based on how much time users spent together (optionally).
- **Object GW History:** The wide-area network infrastructure can store a history of events (i.e., reports) on objects, relating objects to gateways that have issued the reports. Gateways can be ranked based on the time passed since the last report of the object.
- **GW Registry:** The wide-area network infrastructure provides a database relating gateways to their current cell. Ranking can be done by taking account of load balancing among gateways and coverage areas of them.
- **GW Association:** Users are associated with certain gateways.

According to one embodiment all or only a part of the heuristics are used for determining a query scope. The heuristics to be used may according to one embodiment depend on the preferences of the user, in other words a user may select certain heuristics to be used and he may deselect others.

Heuristics used to distribute a query to a set of gateways can correspond to traversing relations in Figure 2. For example, gateways that are located near locations where the object was seen in the past, corresponds to the path (*Obj-Cell-GW*). A more complex example is gateways that are located near a location where users spent a large amount of time, and that are associated with the object owner, through a different but associated user. It corresponds to the path (*Obj-Usr-Usr-Cell-GW*). The path here goes from the object through a user different than the owner, from there to the owner, then through the cell (profile) and finally to a gateway. Note that an applicable heuristic is represented by a path that starts at the entity representing the lost object and ends with the entity type *GW*

Users, application programmers, or service providers can express preferences which combination of heuristics (i.e. which path or which relationship between entities) to use by annotating relation types with a "weight attribute" or a "cost".

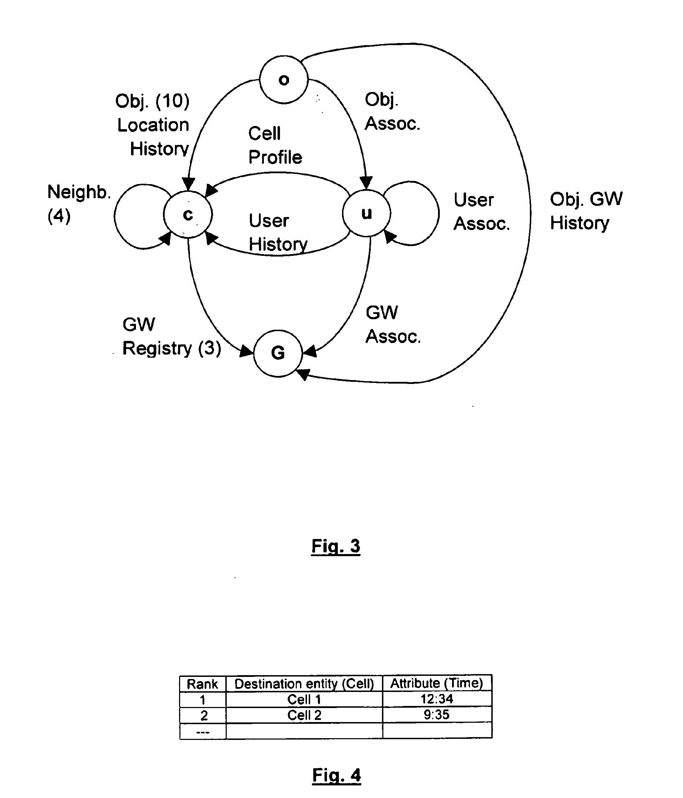

Figure 3 shows the example for the path *Obj-Cell-GW* with cost annotations in brackets. The other non-used heuristics are shown in Fig. 3 without cost annotations. These heuristics may have assigned a very large or (almost) infinite cost attribute (not shown in Fig. 3), which then has the effect that these heuristics are not considered. In other embodiments these heuristics may may also be used by assigning them cost attributes which have the effect that these heuristics also will be considered. The heuristics assessment according to an embodiment may in principle consider all heuristics defined by relations, but by assigning very high cost attributes to some heuristics these may be effectively "switched off" as shown in Fig. 3.

A weight attribute or "cost" expresses preferences between different relations by some numerical value. Thereby the different heuristics (i.e. relations) may be compared with respect to which one is preferable over the other one. By annotating a "weight" to each relation those relations which have a higher "weight" may be preferably pursued over others. If the annotated attribute is a "cost" those relations which have a higher cost may be disfavoured over ones having a lower cost.

Applying heuristics for making a certain decision where to distribute a query may be implemented by actually "passing" through or "traversing" a relation, by traversing a certain relation between two entities, e.g. from one node to another, from one node to a cell, from one node to a user, etcetera. Each such individual step of traversing a relation corresponds to a certain weight attribute or cost as implemented by the data model described before, and therefore each such individual traversing step may be compared with other "competing" traversing steps through comparing the cost or weight attributes. Such an evaluation of the weight or cost attributes of the possible options (the different possible traversing steps) may according to one embodiment implement the heuristics to be applied for providing a query scoping. Those relations (i.e. forwarding destinations) which seem preferable may then be pursued over the ones which seem less preferable, and the traversing in this manner may continue either until a positive query result ha been obtained or until the (accumulated) costs or weights reach a predefined maximum. The whole procedure as described before may start at a source entity (e.g. the object which is sought), it may be traverse from this starting point to selected destinations applying the heuristics represented by relations as described before, and the procedure in this manner provides destinations to which the query should then be forwarded (i.e. gateways) and thus a query scoping where the query is only forwarded to promising entities in the network.

It should be noted here that travelling through the thus generated search graph by traversing relations does not actually correspond to the data path which the query actually will take once the nodes to which the query should be sent are determined. Rather the query will take typically a quite different path, it will be dispatched from the terminal of a user (which may already be different from the starting point for generating the search graph) and it may then sent along any possible path using any routing protocol, e.g. TCP/IP or any other routing protocol like IPv6. However, the search graph generated by traversing the relations may be regarded as a "probe path" or "evaluation path" which is followed to evaluate the costs for sending the query to nodes included in this path. It may be regarded as an "association path" defining an association between an object and a gateway and expresses the expected "suboptimality" involved in employing the heuristics involved in this association path, that is, how "probable/improbable" is it to search at that gateway with successful result.

According to one embodiment all data modelled above (on which the heuristics operate) is available in a database at the backend infrastructure. In this case, applying search heuristics can be implemented in form of declarative queries (which should not be confused with the actual search query, the declarative query only implements the heuristics to determine where to distribute the actual search query, the actual search query is dispatched after the heuristics has been applied and the target nodes are selected) against the available data. Such a declarative query represents a traversing of a search query along the data path given in the query (e.g. "neighbouring cells up to four hops" or "friends of friends up to three association hops away"), and the declarative query returns a corresponding weight attribute or cost which can then be assessed to determine to which destination the actual search query should be forwarded. Implementing such declarative queries can e.g. be carried out using known technologies like described in Rakesh Agrawal and H. V. Jagadish. Direct algorithms for computing the transitive closure of database relations. In VLDB '87: Proceedings of the 13th International Conference on Very Large Data Bases, pages 255-266, San Francisco, CA, USA, 1987. Morgan Kaufmann Publishers Inc. While having all data available in the backend as described before is one possibility, other possibilities also exist. Especially privacy concerned users may want to keep control some parts of the data. In one embodiment this is particularly the case for location profile data which can remain on the user's handheld device only, but also for object and user association data. Besides privacy, other reasons may exist for keeping data separated among several sources or entities.

According to one embodiment one may view and implement each relation as a lightweight component providing a one-to-many relationship in a ranked manner. For example, starting with one given object (the source entity), the component of type *object-location history* yields n cells (destination entities), where the object was last seen. Such a component implementing a one-to-many relation may reside anywhere in the system, even on the user device.

Accordingly, each relation presented as an arrow in Figure 2 in this embodiment has a one-to-many relation. Lightweight relation components provide ranking of relations. For example, the component of type *Obj. Location History* has n cells (destination entities) where the object was last seen, as shown in Figure 4.

In this embodiment a relation-instance exists for each source entity (e.g., for each obj, user, cell, etc.), and it maintains state (a pointer/cursor to the next destination entity that was not yet explored). A source entity may be the source of a graph corresponding to a data path of a query through the network, as will become more apparent from the following description.

The system according to one embodiment shall support the following methods:

> **init(e):** initialize the relation instance to a given source entity
> **pop-entity:** returns the next destination entity, moves cursor (a pointer for the current entity) to the following entity
> **has-entity:** returns whether there is another destination entity exists
> **peek-cost:** returns the costs associated with the next destination entity, does not move cursor

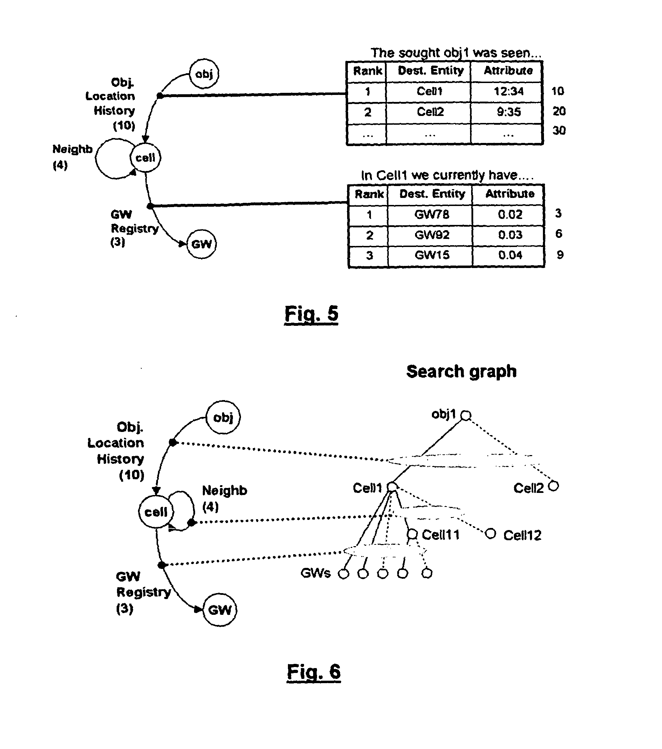

In one implementation as shown in Figure 5, the operation "peek costs" may be implemented as "*current rank* x *costs*". A more coarse-grained implementation can take into account the attribute used for ranking. In the used example of time, peek-costs can return the number of minutes passed since the object was seen in the corresponding cell, possibly weighted by the costs. In the rest of this report, we restrict examples to the simple implementation.

According to one embodiment there may be integrate different lightweight relation components. In the following two kinds of costs are given.

> 1) Costs of heuristic's sub-optimality: peek-costs() of relation components that do not have a *gateway* as a destination entity (e.g., *Obj. Location History, Neighbourhood*) type express the sub-optimality of including an additional destination entity in the search. For example, *Obj. Location History* cells where the object has been seen a long time ago are less probable to return a result, and thus incur higher costs than cells where the object has seen more recently. Thus low peek-costs() can be interpreted as a high probability that a destination entity might help in the search.

2) Actual costs of gateway query: Relation components that have a *gateway* as a destination entity type can incorporate real costs of querying a certain gateway in their peek-costs() method, costs that will later also be billed to the user. This can be a unit of cost reflecting communication effort incurred in querying one gateway, or even be set arbitrarily by each gateway owner.

In the following there will now be described an embodiment where using the lightweight relation components described above, a complete ranking of candidate gateways can be obtained using a graph exploration strategy.

Given a start entity e (in one embodiment the sought object), the algorithm "object search" generates (on demand) a search graph of entities that are *related* to e. This is done as follows: Given a start entity $e$, the algorithm generates a search graph of entities that are related to $e$. Each entity $e$ is associated a set $R_e$ that contains a number of outbound relation instances $\{r_1, r_2, ...\}$ representing a one-to-many relationship between $e$ and other entities (each r corresponds to a lightweight relation component described in the above.

The algorithm generates a set of entity *instances* interconnected by edges created using relation *instances* in the corresponding $R_e$. For example, given an entity e of type *object*, $R_e$ will have three elements {r1, r2, r3} namely of types *obj. location history, obj. association* and *obj.-GW-history*. Note that one may additionally assume that $R_e$ includes only elements r for which r.has-entity() is true. Thus, $R_e$ may contain at most one relation instance for each edge shown outbound of the node representing the type of e in Figure 3.

The generated search graph $G_s$ consists of nodes (entities), and corresponding edges leading to other entities (generated by calls to the r.pop-entity() method of relation instances in the corresponding $R_e$). Thus, each edge corresponds to one relation that has contributed this edge. An example search graph $G_s$ based on the example given in Figure 3 is shown in Figure 6. Note that unless an entity occurs more than once in different relations, the search graph is a tree.

In the following the pseudocode of the algorithm according to one embodiment is given.

---

## Algorithm: Object Search

---

**Data**: Start entity (sought object) $e$; a set of relations $R_e$ for each entity $e$ that includes only elements $r$ for which $r$.has-entity() is true; a cost limit *max*
**Result**: Sequence of *GW* with increasing costs
1 $c_{min}(e), c_{next}(e) := 0$
2 $c_{min}(v), c_{next}(v) :=$ infinite for all $v$ not equal to $e$
3 $h$.insert($e$)
4 **while** $c_{next}(e) < max$ **do**

```
5    e := h.delete-min()
6    if e of type GW and not queried then
7        query(e)
8    end
9    if R_e has a non-empty set then
10       r := argmin, where r is a subset of R_e, r.peek-costs()
11       c_n := r.peek-costs()
12       e_n := r.pop-entity()
13       if c_min (e_n)> c_min (e) + c_n then
14       c_min (e_n), c_next (e_n) := c_min (e) + c_n
15       end
16       if e_n in heap then
17           h.decrease-key(e_n)
18       else
19           r.init(e_n) for all r is a subset of R_en
20           h.insert(e_n)
21       end
22       c_next (e) := c_min (e) + min, where r is subset of R_e, r.peek-costs()
23       h.insert(e)
24   end
25 end
```

The algorithm explores all possible paths in $G_s$ that end in entities of type *gateways*, and accumulates costs of these paths. Each entity $e$ of $G_s$ is attributed with two cost attributes: $c_{min}(e)$ and $c_{next}(e)$. The $c_{min}(e)$ attribute is used to compute the shortest-path in $G_s$ to the entity $e$.

The updates of $c_{min}$ effectively correspond to the respective updates performed in Dijkstra's shortest paths algorithm to the length attribute $l(v)$ of each node $v$. A description of Dijkstra's algorithm can e.g. be found in B. Korte and J. Vygen. Combinatorial Optimization: Theory and Algorithms, pages 141-142. Springer-Verlag, 2nd edition, 2002.

However, compared to Dijkstra's algorithm an entity e cannot be disregarded after the shortest path to e has been found. Instead, the algorithm will re-process an entity e, whenever *another* outgoing edge (leading to another related entity) becomes relevant for the search. For this purpose, entities are kept sorted by a second attribute $c_{next}(e)$, which (initially) corresponds to the length of the shortest-path cmin(e). However, after the first child of e was generated, $c_{next}(e)$ is raised to represent the shortest path to an *additional* child entity of e that could *at a later stage* be created using e's relations.

In order to process entities according to the order of ascending $c_{next}(e)$, according to one embodiment there is used a heap data structure that supports the operations *delete-min* for retrieving the element e with least $c_{next}(e)$ in the heap and *insert* for inserting elements. The heap also supports changing (decreasing) the $c_{next}(e)$ through the *decrease-key* operation.

In the following the actual steps in the above algorithm are reviewed. An empty heap is created, both $c_{min}$ and $c_{next}$ attributes of the start entity $e$ (in this case representing the sought object) are set to 0, and $e$ is added to the heap (lines 1-3). It operates on entity $e$ with lowest $c_{next}$ attribute in the heap (line 5). If $e$ is an entity of type gateway, it is queried and included in the search (line 6-8). If $e$ has a non-empty set of outbound relations $R_e$, the remainder of loop performs the following three steps (lines 9-24):

- retrieve the next least-cost child entity, which has the lowest peek-costs among all relations outbound of e (lines 10-12)
- update the attributes $c_{min}$ and $c_{next}$ of $e_n$ (lines 13-14), and either add $e_n$ to the heap lines (19-20) or just update its position in the heap (lines 16-17)
- raise $c_{next}(e)$ to represent the next least-cost child entity that can at a later point be generated from e and re-insert e to the heap (lines 22-23).

Note that because of the *increasing costs* property of the elements of the relation set $R_e$, the term "min r.peek-costs()" in line 22 will be larger than the corresponding $c_n$ in line 11, because of the call to r.pop-entity that was made in the meantime in line 12.

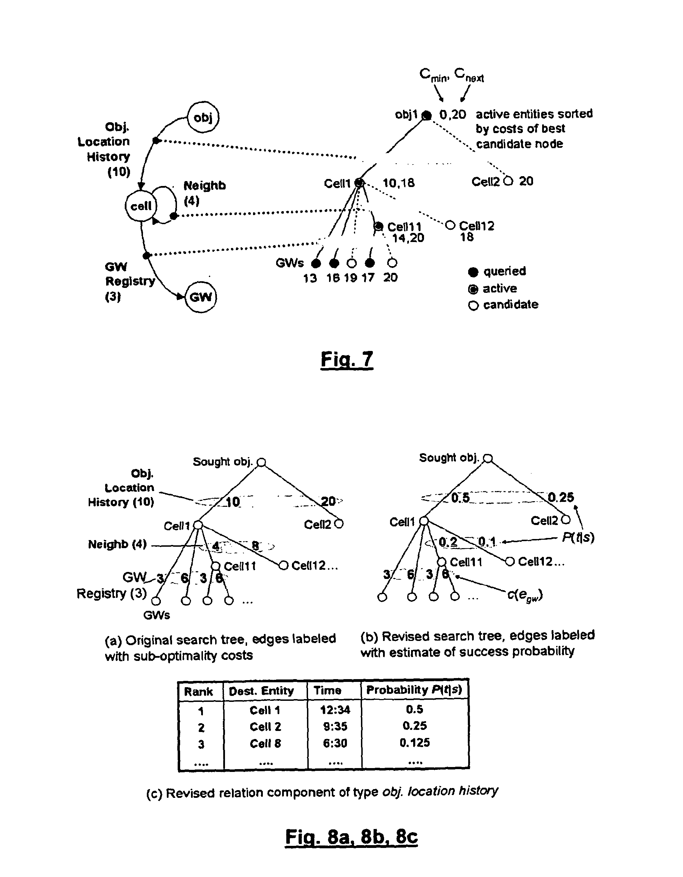

Figure 7 shows $c_{min}$ and $c_{next}$ values at an exemplary point of the algorithm execution. Three GWs have been queried and removed from the heap as they don't have any potential child entities left. *Cell1, Cell11,* and the sought *obj1* can still contribute additional child entities. The candidate entities that might be added next using each relation are shown as dashed edges and white nodes.

Consider the beginning of an iteration in line 5: Given the state shown in Figure 7, line 5 would set e to the entity with minimum $c_{next}(e)$ on the heap, in this case *Cell1*. Then, the type of the r chosen in line 10 is *neighbourhood*, $e_n$ set to *Cell12* and $c_n$ set to 8 in lines 11-12. Thus, *Cell12* would be added to the heap with $c_{next}$ and $c_{min}$ set to 18 in line 20. Finally, $c_{next}(Cell1)$ would be updated to reflect the cost of the next-best potential destination entity (in this case, the $r \in Re$ considered in line 22 is of type *GWRegistry*, as a further GW child of *Cell1* would cost 19). Thus, cnext (Cell1 ) is then set to 19 in line 22 and *Cell1* is re-inserted to the heap in line 23. Note that $c_{next}(e)$ can then be interpreted as the $c_{min}$ of the best possible destination entity that was not yet generated and is thus yet to be added on the heap. Entities are removed from the heap if no further potential destination entities exist.

In the foregoing two kinds of costs have been introduced, costs of heuristic's suboptimality (kind 1) and actual costs of gateway query. The algorithm according to one embodiment integrates the two kinds of costs in the following manner:

If gateway querying (kind 2) should be inexpensive compared to suboptimality costs (kind 1), the search would query a large number of gateways in the first very probable locations before considering less probable ones. If some gateway owners should charge a higher price for querying their gateway, then inexpensive gateways in less probable locations will be considered first before including a high-priced gateway in a very probable location.

If suboptimality costs (kind 1) were interpreted as an estimation of the probability that a destination/child entity might help in the search, the algorithm can be seen as minimising the *expected* total costs billed to the user. In the following there will be described an embodiment which is based on such a re-interpretation of the suboptimality costs.

While in the foregoing there was discussed how relation components construct the algorithm's search tree by adding child nodes on-demand, where the edges are labelled with sub-optimality costs and actual costs, as shown in Figure 8 (a), in the following there will be shown the presented algorithm by labelling the edges of the search tree with a *probability estimate*, as shown in Figure 8 (b). The edge labels can be interpreted as the probability that the edge leads to a GW that finds the sought object, given that the path taken so far is correct. Instead of computing the sum of edge costs, the revised algorithm will then compute the product of edge probabilities to determine the probability $P(e_{gw})$ of a gateway $e_{gw}$.

In this embodiment the interface method of the lightweight relation component, *peek-cost*, is replaced by a method *peek-probability*, which estimates the probability, that the child entity pointed at by the relation instance will be a successful contributor in the search, given that the path taken so far is correct.

*r*: a relation component
*s*: a source entity
{*t*}: a list of destination entities
$P(t|s,r)$: the conditional probability that a given destination entity *t* is on a successful path, given that the source entity *s* is part of this path and given that *r* the chosen relation leading from *s* to *t*
$rank(t)$: the rank of a target entity

As a simple implementation of the estimate $P(t|s,r)$ shown in Figure 8 (c), is

$$P(t|s,r) = 1 / \{2 \times rank(t)\}$$

Of course, more sophisticated implementations may exist, e.g., based on the time attribute.

One can use $P(t|s,r)$ to derive $P(t|s,r)$, which denotes the probability that *t* is on a successful path though *r*, given that this path passes through *s*. By Bayes' theorem:

$$P(t,r|s) = P(t|s,r) \, P(r)$$

One can use $P(r)$ to denote a general estimate of the relation component *r* is successful in search. P(r) can e.g. be simply set by users expressing preferences regarding of the usage *r*, for example, if the user thinks that *Obj. Location History* is important it can set the corresponding $P(r)$ to 1. $P(r)$ can be also estimated from the costs $c_r$. For

example one can define $P(r)$ as follows.

$$P(r) = 1 - c_r / \Sigma_{r' \in Re} \, c_{r'}$$

Here we let $R_e$ denote the set of relations outbound of $e$. Given the original example in Figure 3, one obtains

$$P(Obj.Loc.Hist.) = 1, \; P(GW\;Registry) = 4/7, \; \text{and} \; P(Neighb.) = 3/7.$$

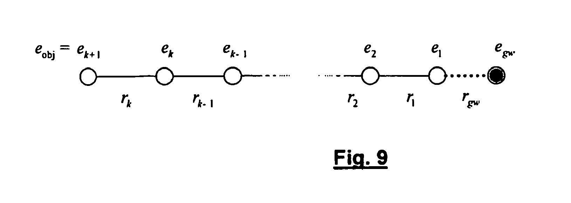

Note that, in the following embodiment it is assumed that only one relation $r$ leads from $s$ to $t$, and thus the term $P(t|s,r)$ which is independent of the relation $r$ is used and set to $P(t|s,r) = P(t,r|)s$. In the embodiment the resulting $P(t|s, r)$ are used as decribed in the following to estimate the success probability of a leaf (gateway). Here we consider a path from a starting entity (root of the search tree) $e_{obj}$ to a target gateway (leaf) $e_{gw}$ as shown in Figure 9.

Each relation component $r_k$ on the path makes the conditional estimate $P(e_k \mid e_{k+1})$. The probability $P(e_1 \dots e_k)$ denotes the probability that $(r_1 \dots r_k)$ is a successful path. In the first $k$ steps, we apply Bayes' theorem for conditional probabilities, and in the last step, we simply assume that the probability $P(e_{obj})$ is equal 1. In the revised algorithm, paths are processed in order of decreasing success probability, instead of processing paths in order of increasing total costs.

$$
\begin{aligned}
P(e_1 \dots e_k) &= P(e_1 \mid e_2 \dots e_k) \, P(e_2 \dots e_k) \\
&= P(e_1 \mid e_2) \, P(e_2 \mid e_3 \dots e_k) \, P(e_3 \dots e_k)
\end{aligned}
$$

$$= \dots$$

$$= \left( \prod_{i=1}^{k} P(e_k \mid e_{k+1}) \right) P(e_{obj})$$

$$= \prod_{i=1}^{k} P(e_k \mid e_{k+1})$$

Using the general estimates of the relation component $r_k$, one can reformulate the probability of a successful path as:

$$P(e_1 \dots e_k) = \prod_{i=1}^{k} P(r_k) P(e_k \mid e_{k+1})$$

In the revised algorithm, the paths are now processed in order of decreasing total costs (i.e., the product of edge probabilities), instead of processing paths in order of increasing total costs (i.e. the sum of edge costs). The last relation in the path, $r_{gw}$, does not rank candidate gateways by successful probability, but by actual costs of gateway query, as shown in Figure 8. These costs are denoted by $c(e_{gw})$.

Note that the probability $P(e_i ... e_k)$, where the path $e_i ... e_k$ is successful, can be stated as the following, because the probability $P(e_j | e_{j+1} ... e_k)$ that a node in on a successful path given the fact that its child and all nodes down the path are successful, is by definition 1.

$$P(e_j \ ... \ e_k) = P(e_j) \ P(e_j | e_{j+1}... \ e_k)$$

$$= P(e_j)$$

Given the actual query costs, defined by the last relation $r_{gw}$, the revised algorithm's aim is to minimize the costs for querying gateways that are on an unsuccessful path. The expected *unnecessary costs* of a path to a gateway $e_{gw}$ are:

$$E(e_{gw}) = c(e_{gw}) \ (1 - \prod_{i=1}^{k} P(r_k) P(e_k | e_{k+1}))$$

The revised algorithm queries gateways in order of increasing *unnecessary costs,* i.e., query the most inexpensive gateway with the highest success probability first.

Hereinafter it will be described how the cost-based algorithm described before may be revised to query gateways in order of increasing *unnecessary costs.* The only differences from the original algorithm shown before are steps 4-5, which deal with the leaves of the tree. We denote $c_{low}$ as a minimum (actual) cost for querying a gateway.

**Step 1.** Start with an empty set of entities sorted in a heap. Entities will be sorted in order of decreasing success probability.

**Step 2.** In each step, consider the entity $e$ with the highest $P(e)$ in the heap. Remove $e$ from the heap, generate child entity $e'$ using the relation that may contribute the child entity $e'$ with the highest $P(e' | e)$.

**Step 3.** If $e'$ is not gateway, compute $P(e') = P(e' | e)P(e)$ and add $e'$ to the heap with the weight $P(e')$. If $e$ may contribute additional child entity, find the next one $e^*$ with highest $P(e^*)$.

**Step 4.** If $e'$ is gateway, add it to a separate sorted set $G$, which is sorted by the expected unnecessary cost, $E(e')$.

**Step 5.** At the end of each step, consider the entity $e$ with the highest $P(e)$ that has not been explored. Any potential child $e'$ of $e$ will have a lower success probability $P(e')$, as it is multiplied additional factor $\in$ (0,1). The algorithm queries a subset of gateways from $G$, for which it is improbable that other will be found with lower *unnecessary costs,* and removes the queried gateways from $G$.

It should be noted that a simpler algorithm can use only success probabilities during the step 5 without taking account of actual costs for querying at gateways. Candidate gateways can be ranked in the same manner with other parts of paths. In this case, the algorithm queries gateways in order of decreasing success probabilities.

The above described algorithm can be used for query scoping in the wide-area infrastructure in a centralised way. According to another embodiment an adaptation of this algorithm is used for local query distribution among GWs and OSs. In this embodiment, when a query is installed at a gateway, the query has limited budget. The budget decreases with real query costs set by gateway owners, ad-hoc communication costs, and sub-optimality costs (e.g., a local approximation of these costs). Local approximation can be based on, for example, local associations on gateways, local history (e.g.. the object has been seen $n$ minutes ago), or communication range for neighbourhood. In this way query scoping can be implemented in a distributed manner.

The invention has in the foregoing been described by exemplary embodiments, whereas the skilled person will readily understand that modifications may be made to the embodiments without departing from the scope of the invention.

In particular, the embodiments relate to a query in an application where a certain object is to be located which possibly has been lost. However, other application scenarios may be imagined as well without difficulties, e.g. the looking for one or more sensors which e.g. are monitoring the weather and which may provide useful data for the forecast of the weather in a certain area. In this case the starting node may be a sensor in the area where the weather is to be forecasted and the relations may express the interdependence of wheather effects so that traversing the relations may yield candidate sensors which may be useful to be queried when the weather for the region where the start sensor is located should be forecasted. Similar applications in other sensor network scenarios may be imagined as well.

However, the system may also be applied for looking for certain service nodes in a network other than sensors, e.g. web servers where some relevant data to be downloaded may be stored. In such a case the starting node may be a web server where the searched data is assumed to be located and the heuristics express relations to other web servers which may - depending on their weight or cost - contribute to a successful search for the data to be downloaded.

The described system may also be applied to product advertisement. In this case the starting node would be the targeted user and destination nodes products which the user might be tempted to buy. In such a system, the following relations may be envisioned: The user's shopping history (relating the user to previously bought products), a product to product relation stating whether a product is a suitable accessory for another, a user to user relation expressing similarity between user's shopping habits, moreover user to user association (e.g., among family, friends) or relating to certain features of the product (a product-to-manufacturer relation, a book-to-author relation, etc.). It could be argued that the approach can present a powerful parameterisation technique for testing and combining different product-recommendation heuristics (that also incorporate existing collaborative filtering techniques) for online shopping. The described system might be especially useful when used with mobile devices where it is more likely that the database might be distributed over more than one device. Moreover, AI approaches (like reinforcement learning) could be used to adapt the actual weights associated with each relation type - to enforce heuristics that worked well for a given user. Alternatively, if a given to-be-advertised product is used as a start node, the algorithm could be used to determine the most promising users to which to advertise this product.

Generally speaking the methods and embodiments of the invention may be applied to determine the distribution scope of any message in a network, in order to select only such entities as destination entities where based on the application of heuristics defined through relations it may be expected that the forwarding of the message returns a positive result, let it be a query result, a successful commercial merchandising result, a successful retrieval of a service, or anything alike.

It will further be apparent to the skilled person that the methods and apparatuses as explained and described in connection with the foregoing description may be implemented either in software or in hardware or by a combination of them. In particular, network elements or entities such as nodes or gateways or sensors may be implemented by using standard components which are suitably programmed such that they operate in accordance with the operations as described hereinbefore.

**Claims**

1.  A method for determining the distribution scope of a query to be distributed to selected nodes in a network infrastructure, said method comprising:

    selecting the nodes to which said query is to be distributed based on heuristics in order to forward the query only to nodes where based on said heuristics a positive query result may be expected, **characterized in that** said heuristics are implemented through a computer-implemented data model which expresses said heuristics as relations between entities of said network, said entities being elements of said network or users of said network, each relation comprising a source entity and one or more destination entities and having annotated a weight attribute or a cost attribute to provide a relevance-based ranking of said destination entities associated with said source entity, and **in that** said method comprises:

    selecting said nodes to which said query is to be dispatched based on the weight attributes of said relations such that those nodes for which the weight attributes are representative of a higher relevance are preferred over those nodes for which the weight attributes are representative of a lower relevance.

2.  The method of claim 1, wherein said method comprises:

    a) starting from a start entity, determining candidate entities to which said query could be dispatched based on said destinations associated by said relation with said start entity and determining the corresponding costs or weights of said candidate elements;
    b) selecting candidate entities to which the query is to be forwarded based on said costs or weights;
    c) using said candidate entities as new start elements and determining new candidate entities based on the relations associating said candidate entities with further nodes;
    repeating the foregoing steps b) and c) until a termination condition being fulfilled.

**3.** The method of claim 1 or 2, further comprising:

generating a search graph based on a source entity by following beginning with said source entity a data path given by traversing said relations from the source entity of a relation to its destinations;
determining the accumulated weight or costs for each destination reached when following said data path;
selecting the nodes to which said query is to be dispatched based on the accumulated weights or costs of said nodes in accordance with the ranking of said nodes according to weights or costs.

**4.** The method of one of the preceding claims, wherein a budget in weight or costs is defined for said query and said method comprises:

terminating the search of said nodes or the distribution of said query when a maximum cost limit is reached.

**5.** The method of one of the preceding claims, wherein
an entity in said network can have assigned one or more relations, and each relation can comprise said entity as a source entity and one or more destination entities, each relation being representative of a different heuristics involving different knowledge about the relevance of the destination entity for the source entity.

**6.** The method of claim 5, wherein said relations may comprise one or more of the following types of relations:

an object association where objects are associated to users;
an object location history relation where the system keeps a history of cells in which the object was last seen;
a cell profile relation where the system stores information about the cells which are more relevant to for users;
a user history relation where the system stores all cells users visited recently;
a neighborhood relation where a cell-based location model can provide information of neighborhood cells;
a user association where users are associated to others;
an object gateway history relation where the wide-area network infrastructure can store a history of events on objects, relating objects to gateways that have issued the events;
a gateway registry relation where the wide-area network infrastructure provides a database relating gateways to their current cell;
a GW Association relation where users are associated with certain gateways.

**7.** The method of one of the preceding claims, wherein
said network is a network connecting a plurality of sensors which may sense signals from electronically tagged objects, whereas
said sensors are connected to said network via gateways which themselves are interconnected through said network infrastructure, whereas said nodes to be selected and to which said query is to be forwarded are gateways which may in response to receipt of said query query said sensors to obtain a query result.

**8.** The method of one of said preceding claims, wherein
said costs are expressed by one or more of the following:

a cost attribute assigned to the relation;
a probability assigned to the relation, said probability indicating the likelihood for finding a positive query result when forwarding said query to a destination in said relation;
the actual costs in monetary units for querying a network element.

**9.** The method of one of the preceding claims, wherein
a cost or weight assigned to a relation is an indication of the preference of this relation over other relations, and the destinations included in a relation are assigned a ranking parameter so that the cost or weight of a destination is based on the cost or weight assigned to the relation and the ranking parameter assigned to the destination.

**10.** The method of one of the preceding claims, wherein
said relations implementing said heuristics are at least in part stored in a distributed manner in entities of said network, and/or
an algorithm for selecting said nodes to which the query is to be distributed is executed in a distributed manner by using said distributedly stored relations.

**11.** The method of claim 10, wherein
a distributed query scoping is implemented by assigning a budget which is decreased hop-by-hop, or
a centralized node handles a budget and distributed nodes reserve a budget for distribution in an ad-hoc manner.

**12.** An apparatus for determining the distribution scope of a query to be distributed to selected nodes in a network infrastructure, said apparatus comprising:

means for selecting the nodes to which said query is to be distributed based on heuristics in order to forward the query only to search nodes where based on said heuristics a positive query result may be expected, **characterized by** said apparatus further comprising:

means for implementing said heuristics through a computer-implemented data model which expresses said heuristics as relations between entities of said network, said entities being elements of said network or users of said network, each relation comprising a source entity and one or more destination entities and having annotated a weight attribute or a cost attribute to provide a relevance-based ranking of said destination entities associated with said source entity, and
means for selecting said nodes to which said query is to be dispatched based on the weight attributes of said relations such that those nodes for which the weight attributes are representative of a higher relevance are preferred over those nodes for which the weight attributes are representative of a lower relevance.

**13.** The apparatus of claim 12, further comprising:

means for carrying out a method according to one of claims 2 to 11.

**14.** A computer program comprising computer executable code which enables a computer when being executed thereon to carry out a method according to one of claims 1 to 11.

**Patentansprüche**

**1.** Verfahren zum Ermitteln des Verteilungsbereichs einer Suchanfrage, die auf ausgewählte Knoten in einer Netzwerkinfrastruktur verteilt werden soll, wobei das Verfahren aufweist:

Auswählen der Knoten, zu denen die Suchanfrage verteilt werden soll basierend auf einer Heuristik, um die Suchanfrage lediglich zu solchen Knoten weiterzuleiten, bei denen basierend auf der Heuristik ein positives Suchanfrageergebnis erwartet werden kann, **dadurch gekennzeichnet, dass**
die Heuristik implementiert wird durch ein computerimplementiertes Datenmodell, das die Heuristik als Relationen zwischen Entitäten des Netzwerks ausdrückt, wobei die Entitäten Elemente des Netzwerks oder Benutzer des Netzwerks sind, wobei jede Relation eine Quellentität und eine oder mehrere Zielentitäten aufweist und ihr ein Gewichtsattribut oder ein Kostenattribut zugeordnet ist, um ein relevanzbasiertes Ranking der Zielentitäten, die der Quellentität zugeordnet sind, zu liefern, wobei das Verfahren aufweist:

Auswählen der Knoten, an die die Suchanfrage abgesandt werden soll basierend auf den Gewichtsattributen der Relationen derart, dass diejenigen Knoten, für die die Gewichtsattribute repräsentiv für eine höhere Relevanz sind, bevorzugt werden gegenüber denjenigen Knoten, für die die Gewichtsattribute repräsentativ für eine niedrigere Relevanz sind.

**2.** Verfahren nach Anspruch 1, wobei das Verfahren aufweist:

a) ausgehend von einer Startentität, Ermitteln von Kandidatenentitäten, zu denen die Suchanfrage abgesandt werden könnte, basierend auf den Zielen, die durch die Relation der Startentität zugeordnet sind und Ermitteln der entsprechenden Kosten oder Gewichte der Kandidatenelemente;
b) Auswählen von Kandidatenentitäten, an die die Suchanfrage weitergeleitet wird basierend auf den Kosten oder Gewichten;
c) Verwenden der Kandidatenentitäten als neue Startelemente und Ermitteln neuer Kandidatenentitäten basierend auf den Relationen, die die Kandidatenentitäten weiteren Knoten zuordnen;

Wiederholen der vorhergehenden Schritte b) und c) bis eine Abbruchbedingung erfüllt ist.

3. Verfahren nach Anspruch 1 oder 2, ferner aufweisend:

Erzeugen eines Suchgraphs, basierend auf einer Quellentität durch Verfolgen, beginnend mit der Quellentität, eines Datenpfads, der gegeben wird durch Durchlaufen der Relationen von der Quellentität einer Relation zu ihren Zielen;
Ermitteln der akkumulierten Gewichte oder Kosten für jedes Ziel, das durch Folgen des Datenpfades erreicht wird;
Auswählen der Knoten, zu denen die Suchanfrage abgesandt werden soll basierend auf den akkumulierten Gewichten oder Kosten der Knoten in Übereinstimmung mit dem Ranking der Knoten gemäß der Gewichte oder Kosten.

4. Verfahren nach einem der vorhergehenden Ansprüche, wobei ein Budget in Gewichten oder Kosten definiert wird für die Suchanfrage und das Verfahren aufweist:

Abbrechen des Suchens der Knoten oder der Verteilung der Suchanfrage, wenn ein maximales Kostenlimit erreicht ist.

5. Verfahren nach einem der vorhergehenden Ansprüche, wobei
eine Entität in dem Netzwerk eine oder mehrere Relationen zugewiesen haben kann und jede Relation die Entität als Quellentität und eine oder mehrere Zielentitäten enthalten kann, wobei jede Relation repräsentativ ist für eine unterschiedliche Heuristik, die unterschiedliches Wissen über die Relevanz der Zielentität für die Quellentität beinhaltet.

6. Verfahren nach Anspruch 5, wobei die Relationen eine oder mehrere der folgenden Typen von Relationen aufweisen können;
eine Objektassoziation, wobei Objekte Benutzern assoziiert sind;
eine Objekt-Ort-Historierelation, wobei das System eine Historie von Zellen behält, in denen das Objekt zuletzt gesehen wurde;
eine Zellprofil-Relation, wobei das System Informationen über die Zellen, die mehr relevant für die Benutzer sind, speichert;
eine Benutzer-Historie-Relation, wobei das System alle Zellen speichert, die Benutzer kürzlich besucht haben;
eine Nachbarschaftsrelation, wobei ein zellenbasiertes Ortsmodell Informationen über Nachbarschaftszellen liefern kann;
eine Benutzerassoziation, wobei Benutzer anderen assoziiert werden;
eine Objekt-Gateway-Historie-Relation, wobei die Weitbereichs-Netzwerkinfrastruktur eine Historie von Ereignissen auf Objekten speichern kann, die Objekte mit Gateways, die die Ereignisse erzeugt haben, in Beziehung setzen;
eine Gateway-Registry-Relation, wobei die Weitbereichs-Netzwerkinfrastruktur eine Datenbank bereitstellt, die Gateways mit ihrer momentanen Zelle in Beziehung setzt;
eine GW-Assoziations-Relation, wobei Benutzer mit bestimmten Gateways assoziiert werden.

7. Verfahren nach einem der vorhergehenden Ansprüche, wobei
das Netzwerk ein Netzwerk ist, das eine Mehrzahl von Sensoren, die Signale von elektronisch getagten Objekten empfangen können, verbindet, wobei
die Sensoren mit dem Netzwerk über Gateways verbunden sind, die selbst wiederum durch die Netzwerkinfrastruktur verbunden sind, wobei die Knoten, die ausgewählt werden sollen und an die die Suchanfrage weitergeleitet werden soll, Gateways sind, die in Reaktion auf den Empfang der Suchanfrage die Sensoren abfragen können, um ein Suchanfrageergebnis zu erhalten.

8. Verfahren nach einem der vorhergehenden Ansprüche, wobei
die Kosten durch eines oder mehr der folgenden ausgedrückt werden;
ein Kostenattribut, das der Relation zugewiesen ist;
eine Wahrscheinlichkeit, die der Relation zugewiesen ist, wobei die Wahrscheinlichkeit die Wahrscheinlichkeit zum Finden eines positiven Suchanfrageergebnisses angibt, wenn die Suchanfrage zu einem Ziel der Relation gesandt wird;
die tatsächlichen Kosten in monetären Einheiten zum Abfragen eines Netzwerkelements.

9. Verfahren nach einem der vorhergehenden Ansprüche, wobei
die Kosten oder das Gewicht, das einer Relation zugewiesen ist, eine Angabe der Bevorzugung dieser Relation

EP 1 841 178 B1

gegenüber anderen Relationen ist, und
die Ziele, die in einer Relation enthalten sind, einen Ranking-Parameter zugewiesen haben, so dass die Kosten oder das Gewicht eines Zieles basieren auf den Kosten oder dem Gewicht, das der Relation zugewiesen ist und dem Ranking-Parameter, der dem Ziel zugewiesen ist.

**10.** Verfahren nach einem der vorhergehenden Ansprüche, wobei
die Relationen, die die Heuristik implementieren, zumindest teilweise in einer verteilten Form in Entitäten des Netzwerks gespeichert sind, und/oder
ein Algorithmus zum Auswählen der Knoten, an die die Suchanfrage verteilt werden soll, auf verteilte Weise ausgeführt wird durch Verwendung der verteilt gespeicherten Relation.

**11.** Verfahren nach Anspruch 10, wobei
ein verteiltes Suchanfrage-Verteilen implementiert wird durch Zuweisen eines Budgets, das Sprung-für-Sprung verringert wird, oder
ein zentralisierter Knoten ein Budget verwaltet und verteilt die Knoten ein Budget für die Verteilung auf eine ad-hoc-Weise reservieren.

**12.** Vorrichtung zum Ermitteln des Verteilungsbereichs einer Suchanfrage, die auf ausgewählte Knoten in einer Netzwerkinfrastruktur verteilt werden soll, wobei die Vorrichtung aufweist:

Eine Einrichtung zum Auswählen der Knoten, zu denen die Suchanfrage verteilt werden soll basierend auf einer Heuristik, um die Suchanfrage lediglich zu solchen Knoten weiterzuleiten, bei denen basierend auf der Heuristik ein positives Suchanfrageergebnis erwartet werden kann, **dadurch gekennzeichnet, dass** die Vorrichtung ferner aufweist:

eine Einrichtung zum Implementieren der Heuristik durch ein computerimplementiertes Datenmodell, das die Heuristik als Relationen zwischen Entitäten des Netzwerks ausdrückt, wobei die Entitäten Elemente des Netzwerks oder Benutzer des Netzwerks sind, wobei jede Relation eine Quellentität und eine oder mehrere Zielentitäten aufweist und ihr ein Gewichtsattribut oder ein Kostenattribut zugeordnet ist, um ein relevanzbasiertes Ranking der Zielentitäten, die der Quellentität zugeordnet sind, zu liefern, und
eine Einrichtung zum Auswählen der Knoten, an die die Suchanfrage abgesandt werden soll basierend auf den Gewichtsattributen der Relationen derart, dass diejenigen Knoten, für die die Gewichtsattribute repräsentiv für eine höhere Relevanz sind, bevorzugt werden gegenüber denjenigen Knoten, für die die Gewichtsattribute repräsentativ für eine niedrigere Relevanz sind.

**13.** Vorrichtung nach Anspruch 12, ferner aufweisend:

eine Einrichtung zum Ausführen eines Verfahrens gemäß einem der Ansprüche 2 bis 11.

**14.** Ein Computerprogramm aufweisend computerausführbaren Code, welcher einen Computer in die Lage versetzt, wenn er darauf ausgeführt wird, ein Verfahren gemäß einem der Ansprüche 1 bis 11 auszuführen.

**Revendications**

**1.** Procédé destiné à déterminer l'étendue de distribution d'une requête qui doit être distribuée à des noeuds sélectionnés dans une infrastructure de réseau, ledit procédé comportant les étapes ci-dessous consistant à :

sélectionner les noeuds auxquels ladite requête doit être distribuée sur la base de méthodes heuristiques afin de transmettre la requête uniquement à des noeuds où, sur la base desdites méthodes heuristiques, un résultat de requête positif peut être attendu, **caractérisé en ce que**
lesdites méthodes heuristiques sont mises en oeuvre par le biais d'un modèle de données mis en oeuvre sur un ordinateur lequel exprime lesdites méthodes heuristiques en tant que des relations entre des entités dudit réseau, lesdites entités étant des éléments dudit réseau ou des utilisateurs dudit réseau, chaque relation comportant une entité source et une ou plusieurs entités de destination et présentant un attribut de pondération ou un attribut de coût annexé pour délivrer un classement basé sur la pertinence desdites entités de destination associées à ladite entité source, et **en ce que** ledit procédé comporte les étapes ci-dessous consistant à :

sélectionner lesdits noeuds auxquels ladite requête doit être distribuée sur la base des attributs de pondération desdites relations de sorte que les noeuds pour lesquels les attributs de pondération sont représentatifs d'une pertinence supérieure sont préférés par rapport aux noeuds pour lesquels les attributs de pondération sont représentatifs d'une pertinence inférieure.

**2.** Procédé selon la revendication 1, dans lequel ledit procédé comporte les étapes ci-dessous consistant à :

a) en commençant par une entité de départ, déterminer des entités candidates auxquelles ladite requête pourrait être distribuée, sur la base desdites destinations associées par ladite relation à ladite entité de départ, et déterminer les coûts correspondants ou pondérations correspondantes desdits éléments candidats ;
b) sélectionner des entités candidates auxquelles la requête doit être acheminée sur la base desdits coûts ou desdites pondérations ;
c) utiliser lesdites entités candidates en tant que des nouveaux éléments de départ et déterminer de nouvelles entités candidates sur la base des relations associant lesdites entités candidates à des noeuds supplémentaires ;

répéter les précédentes étapes b) et c), jusqu'à ce qu'une condition de fin soit rencontrée.

**3.** Procédé selon la revendication 1 ou 2, comportant en outre les étapes ci-dessvus consistant à :

générer un graphe de recherche sur la base d'une entité source en suivant, en commençant par ladite entité source, un chemin de données donné en traversant lesdites relations de l'entité source d'une relation vers ses destinations ;
déterminer les coûts accumulés ou les pondérations accumulées pour chaque destination atteinte en suivant ledit chemin de données ;
sélectionner les noeuds auxquels ladite requête doit être distribuée sur la base des pondérations accumulées ou des coûts accumulés desdits noeuds, selon le classement desdits noeuds en fonction des pondérations ou des coûts.

**4.** Procédé selon l'une quelconque des revendications précédentes, dans lequel un budget, en termes de pondérations ou de coûts, est défini pour ladite requête, et ledit procédé comporte l'étape ci-dessous consistant à :

mettre fin à la recherche desdits noeuds ou à la distribution de ladite requête lorsqu'une limite de coût maximale est atteinte.

**5.** Procédé selon l'une quelconque des revendications précédentes, dans lequel
à une entité dans ledit réseau peut être affectées une ou plusieurs relations, et chaque relation peut comporter ladite entité en tant qu'une entité source et une ou plusieurs entités de destination, chaque relation étant représentative de méthodes heuristiques différentes impliquant une connaissance différente relativement à la pertinence de l'entité de destination pour l'entité source.

**6.** Procédé selon la revendication 5, dans lequel lesdites relations peuvent comporter un ou plusieurs des types de relations ci-après :

une association d'objets où les objets sont associés à des utilisateurs ;
une relation d'historique de localisation d'objets où le système conserve un historique de cellules dans lesquelles l'objet a été vu pour la dernière fois ;
une relation de profil de cellules où le système stocke les informations relatives aux cellules qui ont un degré de pertinence supérieur pour des utilisateurs ;
une relation d'historique d'utilisateurs où le système stocke toutes les cellules visitées récemment par des utilisateurs ;
une relation de voisinage où un modèle de localisation à base de cellule peut fournir des informations de cellules de voisinage ;
une association d'utilisateurs où les utilisateurs sont associés à d'autres utilisateurs ;
une relation d'historique de passerelle d'objets où l'infrastructure de réseau étendue peut stocker un historique d'événements sur des objets, en associant des objets à des passerelles qui ont émis les événements ;
une relation de registre de passerelle où l'infrastructure de réseau étendue fournit une base de données associant des passerelles à leur cellule en cours ;
une relation d'association de passerelle GW où les utilisateurs sont associés à certaines passerelles.

**7.** Procédé selon l'une quelconque des revendications précédentes, dans lequel
ledit réseau est un réseau connectant une pluralité de capteurs en mesure de détecter des signaux à partir d'objets étiquetés électroniquement, alors que
lesdits capteurs sont connectés audit réseau via des passerelles qui sont elles-mêmes interconnectées à travers ladite infrastructure de réseau, alors que lesdits noeuds à sélectionner et auxquels ladite requête doit être acheminée sont des passerelles, qui peuvent, en réponse à la réception de ladite requête, interroger lesdits capteurs pour obtenir un résultat de requête.

**8.** Procédé selon l'une quelconque desdites revendications précédentes, dans lequel lesdits coûts sont exprimés par un ou plusieurs des éléments suivants :

un attribut de coût affecté à la relation ;
une probabilité affectée à la relation, ladite probabilité indiquant la probabilité de trouver un résultat de requête positif lors de la transmission de ladite requête à une destination dans ladite relation ;
les coûts réels, en unités monétaires, engagés en vue d'interroger un élément de réseau.

**9.** Procédé selon l'une quelconque des revendications précédentes, dans lequel
un coût ou une pondération affecté(e) à une relation est une indication de la préférence de cette relation par rapport à d'autres relations, et
les destinations incluses dans une relation reçoivent un paramètre de classement, de sorte que le coût ou la pondération d'une destination est basé(e) sur le coût ou la pondération affecté(e) à la relation et sur le paramètre de classement affecté à la destination.

**10.** Procédé selon l'une quelconque des revendications précédentes, dans lequel
lesdites relations mettant en oeuvre lesdites méthodes heuristiques sont au moins en partie stockées, d'une manière distribuée, dans des entités dudit réseau, et/ou
un algorithme permettant de sélectionner lesdits noeuds auxquels la requête doit être distribuée est exécuté d'une manière distribuée en utilisant lesdites relations stockées de manière distribuée.

**11.** Procédé selon la revendication 10, dans lequel
une étendue de requête distribuée est mise en oeuvre en affectant un budget qui est diminué par sauts, ou
un noeud centralisé gère un budget et des noeuds distribués réservent un budget pour la distribution d'une manière base ad-hoc.

**12.** Dispositif destiné à déterminer l'étendue de distribution d'une requête qui doit être distribuée à des noeuds sélectionnés dans une infrastructure de réseau, ledit dispositif comportant ;
un moyen permettant de sélectionner les noeuds auxquels ladite requête doit être distribuée sur la base de méthodes heuristiques afin de transmettre la requête uniquement à des noeuds de recherche où, sur la base desdites méthodes heuristiques, un résultat de requête positif peut être attendu, **caractérisé en ce que** ledit dispositif comporte en outre :

un moyen permettant de mettre en oeuvre lesdites méthodes heuristiques par le biais d'un modèle de données mis en oeuvre sur un ordinateur lequel exprime lesdites méthodes heuristiques en tant que des relations entre des entités dudit réseau, lesdites entités étant des éléments dudit réseau ou des utilisateurs dudit réseau, chaque relation comportant une entité source et une ou plusieurs entités de destination et présentant un attribut de pondération ou un attribut de coût affecté pour délivrer un classement basé sur la pertinence desdites entités de destination associées à ladite entité source, et
un moyen permettant de sélectionner lesdits noeuds auxquels ladite requête doit être distribuée sur la base des attributs de pondération desdites relations de sorte que ces noeuds pour lesquels les attributs de pondération sont représentatifs d'une pertinence supérieure, sont préférés par rapport à ces noeuds pour lesquels les attributs de pondération sont représentatifs d'une pertinence inférieure.

**13.** Dispositif selon la revendication 12, comportant en outre :

un moyen pour mettre en oeuvre un procédé selon l'une des revendications 2 à 11.

**14.** Programme informatique comportant un code exécutable sur un ordinateur qui permet à un ordinateur, lorsqu'il est exécuté sur ce dernier, de mettre en oeuvre un procédé selon les revendications 1 à 11.

**Asciation Reg.**

Cell Profile

MyDatabase   GlobalMarket

**Dynamic Scoping**

DB-Adaptor

Ubiq. Gateway

User Agent

Global Query Mgr.

Storage, Query Distributed Scoping

Wide Area Network        Ubiquitous Gateways      SensorNodes

**Fig. 1**

obj

Obj. Location History

Obj. Assoc.

Cell Profile

Neighb.        cell        usr

User Assoc.

Obj. GW History

User History

GW Registry

GW Assoc.

GW

**Fig. 2**

Obj. (10)
Location
History

Neighb.
(4)

Cell
Profile

User
History

Obj.
Assoc.

User
Assoc.

Obj. GW
History

GW
Registry (3)

GW
Assoc.

**Fig. 3**

| Rank | Destination entity (Cell) | Attribute (Time) |
|------|---------------------------|------------------|
| 1 | Cell 1 | 12:34 |
| 2 | Cell 2 | 9:35 |
| --- | | |

**Fig. 4**

The sought obj1 was seen...

| Rank | Dest. Entity | Attribute | |
|------|--------------|-----------|----|
| 1 | Cell1 | 12:34 | 10 |
| 2 | Cell2 | 9:35 | 20 |
| ... | ... | ... | 30 |

In Cell1 we currently have....

| Rank | Dest. Entity | Attribute | |
|------|--------------|-----------|---|
| 1 | GW78 | 0.02 | 3 |
| 2 | GW92 | 0.03 | 6 |
| 3 | GW15 | 0.04 | 9 |

Obj.
Location
History
(10)

Neighb
(4)

obj

cell

GW
Registry
(3)

GW

**Fig. 5**

**Search graph**

Obj.
Location
History
(10)

Neighb
(4)

GW
Registry
(3)

obj

cell

GW

obj1

Cell1

Cell2

Cell11

Cell12

GWs

**Fig. 6**

$C_{min}, C_{next}$

obj1 ● 0,20   active entities sorted
by costs of best
candidate node

Obj.
Location
History
(10)

obj

Neighb
(4)

cell

Cell1 ● 10,18           Cell2 ○ 20

● Cell11          ○ Cell12
14,20              18

GW
Registry
(3)

GW

GWs ● ● ○ ● ○
13 16 19 17 20

● queried
◉ active
○ candidate

**Fig. 7**

Sought obj. ○

Obj.
Location
History (10)        10          20

Cell1 ○          Cell2 ○

Neighb (4)          4      8

GW   3  6  3  6   ○ Cell11      ○ Cell12...
Registry (3) ○  ○  ○  ○  ...

GWs

(a) Original search tree, edges labeled
with sub-optimality costs

Sought obj. ○

0.5          0.25

Cell1 ○          Cell2 ○          $P(t|s)$

0.2    0.1

3  6  3  6   ○ Cell11      ○ Cell12...
○  ○  ○  ○  ...          $c(e_{gw})$

(b) Revised search tree, edges labeled
with estimate of success probability

| Rank | Dest. Entity | Time | Probability $P(t|s)$ |
|------|--------------|-------|----------------------|
| 1 | Cell 1 | 12:34 | 0.5 |
| 2 | Cell 2 | 9:35 | 0.25 |
| 3 | Cell 8 | 6:30 | 0.125 |
| .... | .... | .... | .... |

(c) Revised relation component of type *obj. location history*

**Fig. 8a, 8b, 8c**

$e_{obj} = e_{k+1}$     $e_k$     $e_{k-1}$        $e_2$     $e_1$     $e_{gw}$

$r_k$     $r_{k-1}$        $r_2$     $r_1$     $r_{gw}$

**<u>Fig. 9</u>**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040030477 A

**Non-patent literature cited in the description**

- *Proceedings of the 1997 Australian UNIX Users Group,* September 1997
- **C. NODA ; M. SGROI ; W. KELLERER ; C. FRANK ; C. RODUNER.** Poster Abstract: Interfacing the Real World with Ubiquitous Gateways. *ON LINE,* 13 February 2006, 1-3
- **DUBOIS-FERRIERE H et al.** Efficient and practical query scoping in sensor networks. *MOBILE AD-HOC AND SENSOR SYSTEMS,* 25 October 2004, ISBN 0-7803-8815-1, 564-566
- Direct algorithms for computing the transitive closure of database relations. **Rakesh Agrawal ; H. V. Jagadish.** In VLDB '87: Proceedings of the 13th International Conference on Very Large Data Bases. Morgan Kaufmann Publishers Inc, 1987, 255-266
- **B. Korte ; J. Vygen.** Combinatorial Optimization: Theory and Algorithms. Springer-Verlag, 2002, 141-142